# EUROPEAN PATENT APPLICATION

(11) **EP 4 362 254 A1**
(43) Date of publication of application: **01.05.2024**
(21) Application number: 23204966.8
(22) Date of filing: 20.10.2023
(51) Int. Cl.: H02G 3/08, E06B 7/28

(54) **INTEGRATED PANEL FOR HOME AUTOMATION**

(30) Priority: 24.10.2022 IT 202200004350 U
(71) Applicant: Microdevice S.r.l., 25020 Flero (BS) (IT)
(72) Inventor: ABRAMI, Claudio, 25020 Flero (BS) (IT); PIVA, Marco, 25020 Flero (BS) (IT)
(74) Representative: Marietti, Andrea

(57) **Abstract**

The invention concerns an integrated panel for home automation. The panel is adapted to house electrical components for home or professional use, in particular for applications for automating or controlling the operation of electrical loads.

The panel comprises a container configured to enclose wiring that can be combined with the aforesaid electrical loads and comprises surfaces facing inwards and/or outwards of a room for home or professional use, which is accessed through a door, said surfaces having a plurality of user-operable commands in order to act as control means on the aforesaid electrical loads, said surfaces further comprising audible and/or light indicators, which is characterised in that the aforesaid panel is integrated into the jamb of the aforesaid door.

## Description

### FIELD OF THE INVENTION

The present invention relates to an integrated panel for home automation.

In particular, the present invention relates to a panel adapted to house electrical components for home or office use, particularly for applications for automating or controlling the operation of electrical loads.

### KNOWN PRIOR ART

As known, home automation is the discipline that deals with the study of technologies adapted to improve the quality of life in the home and offices.

This highly interdisciplinary area requires the contribution of many technologies and professions, including construction engineering, architecture, energy engineering, management engineering, automation, electrical engineering, electronics, telecommunications, information technology and design.

Many applications for home automation are known, which operate through control means on electrical loads combined with home or office systems.

In the present description, the general term "control means" refers to any device adapted to regulate, in a preferably automatic manner and following one or more commands imparted by the operator, the voltage or intensity of the current circulating on a line directed to an electrical load. This line can be both a power supply line and a line transmitting electrical signals, such as e.g. an instruction bus or a data communication cable. As a result, the "control means" mentioned herein may preferably comprise automatic microcontrollers, "smart" switches, i.e., equipped with a control logic, or other devices for regulating an electric quantity, which are equipped with a programmable processor.

Herein and hereinafter, "electrical load" further means any electrically powered device or apparatus that carries out its own well-defined function inside a home electrical system and, particularly, inside a home automation system. Electrical loads can therefore be, e.g., a light source, a sensor for environmental conditions or for detecting the presence of entities in a room, equipment equipped with electric motors, such as e.g. motorised blinds or curtains or fans, remotely controlled power outlets, heating and/or air conditioning equipment, alarm equipment, control panels and instrumentation for commanding control means, etc.

Usually, the installation of these integrated panels takes place inside an existing masonry structure, thereby requiring costly masonry works.

Object of the present invention is to provide an integrated panel for home automation that solves the problems of the known art, perfectly integrating into the architectural layout of a room.

Another object of the present invention is to achieve the aforesaid result in a practical and economical way.

### BRIEF SUMMARY OF THE INVENTION

These and other objects are achieved by an integrated panel for home automation, wherein the aforesaid panel is adapted to house electrical components for home or professional use, in particular for applications for automating or controlling the operation of electrical loads, wherein the aforesaid panel comprises a container configured to enclose wiring which can be combined with the aforesaid electrical loads, wherein the aforesaid panel comprises surfaces facing inwards and/or outwards of a room for home or professional use, which it is accessed through a door, said surfaces having a plurality of user-operable commands in order to act as control means on the aforesaid electrical loads, said surfaces further comprising audible and/or light indicators related to physical states and/or parameters of the room, characterised in that the aforesaid panel is integrated into the jamb of the aforesaid door.

An advantage of this implementation is that it allows a multitude of elements to be integrated into a single integrated panel, which then forms part of the door jamb to which it is applied. The arrangement of the door jamb to house the integrated panel makes it unnecessary to carry out complex masonry works to make a seat for this integrated panel.

Further characteristics and advantages of the invention can be deduced from the dependent claims.

### BRIEF DESCRIPTION OF THE FIGURES

Further characteristics and advantages of the invention will become clear from reading the following description provided by way of non-limiting example, with the aid of the figures depicted in the accompanying drawings, in which:
- Figure 1 is a front view of a door equipped with a panel for home automation according to an implementation of the invention, in particular for residential applications;
- Figure 2 is a front view of a door equipped with a panel for home automation according to an alternative implementation of the invention, in particular for applications in wellness contexts; and
- Figure 3 is a front view of a door equipped with a panel for home automation according to a third implementation of the invention, in particular for offices.

### DETAILED DESCRIPTION OF SOME EMBODIMENTS OF THE PRESENT INVENTION

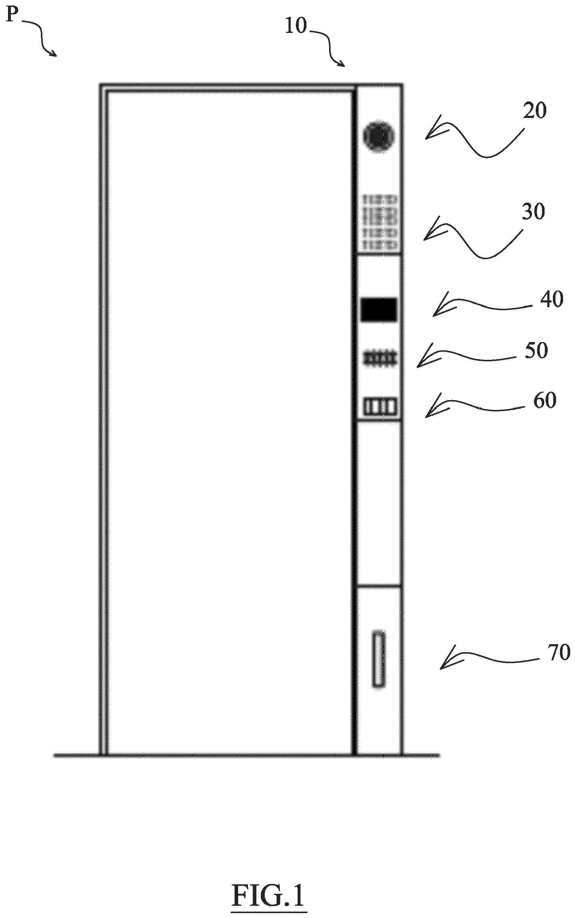

With reference first to figure 1, a door P equipped with a panel for home automation, according to an implementation of the invention, is visible in particular for residential applications, said panel being globally denoted by the reference numeral 10.

In particular, the panel 10 is adapted to house electrical components for home use, particularly for applications for automating or controlling the operation of electrical loads. First, the panel comprises a container configured to enclose wiring that can be combined with the aforesaid electrical loads.

In addition, the panel comprises surfaces facing inward and/or outward of a room for home use that is accessed through the door P, wherein said surfaces have a plurality of user-operable commands and/or audible and/or light indicators.

According to an aspect of the present invention, the panel 10 is integrated into the jamb of the door P.

It should be noted that the integration of the panel 10 within the door jamb not only allows the door P with the respective jamb to be made, inside which the aforesaid panel 10 is integrated into a suitable environment, and then this door P to be mounted in the intended room without therefore having to carry out complex masonry works, but it also preferably allows any wiring and/or communication devices connected to this panel 10 to be arranged, for controlling the electrical loads of the home automation system inside the jamb of the door P, thus allowing the entire home automation system controlled by panel 10 to be easily arranged, given the fact that with the present invention the arrangement of the integrated control panel 10 is known immediately.

By analysing the structure of the panel 10 depicted herein, according to a preferred embodiment, and proceeding from top to bottom, it is noticeable first of all a set of elements related to a burglar alarm system 20, i.e. a motion sensor or camera, a loudspeaker, a wall-mounted outlet light point, an alarm siren, a flag-like fire sign and an emergency lighting device.

Underneath the burglar alarm unit 20, there is a video intercom 30 equipped with a display that allows text or alerts to be displayed.

Alternatively, a back-lit plate may be provided.

Therefore, a first command of home automation unit 40 is provided, which e.g. can allow the lights to be switched on or off or even to control, through special switch, motorised shutters or curtains and a thermostat for controlling the indoor temperature to be set.

These commands can also be input through the touch screen integrated into the panel 10.

A second home automation unit command 50 can also be provided to switch the lights on or off or even to control, through special switch, motorised shutters or curtains or other through special switches.

The panel 10 can also provide, on the side facing the outside of the house, a bell 60 with name-holder case.

Finally, the panel 10 can comprise a bypass socket or a Schuko power socket 70 as well as a step light and a doorbell buzzer.

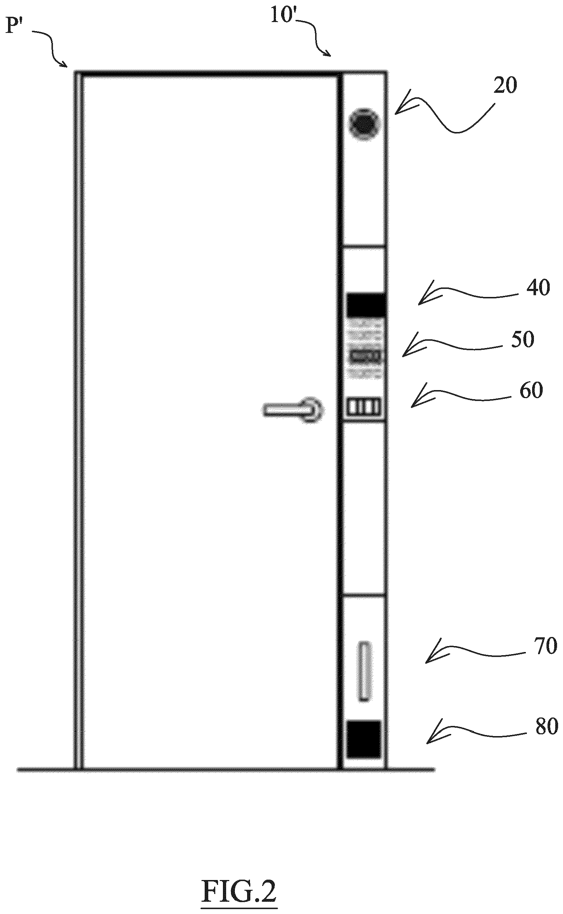

Figure 2 is a front view of a door P' equipped with a home automation panel 10' integrated into the respective jamb, according to an alternative implementation of the invention which is designed in particular for applications in wellness contexts.

As known, the term wellness refers to a philosophy of life that places the well-being of the person at the centre of attention, proposing motor activity, individualised physical exercise, mental training sessions, relaxation strategies and more in centres specially dedicated and equipped for such activities.

Also in this case, the panel 10' is integrated into the jamb of the door P'.

This allows a separate implementation of the door P' with the respective jamb integrating the panel 10', and later its installation in the room, for home or professional use, as an ordinary door, thereby simplifying the installation of that panel 10' and the respective home automation system with the respective electrical loads, that it controls.

First of all, the panel 10' comprises a set of elements related to a burglar alarm system 20, i.e. a motion sensor or camera, a loudspeaker, a wall-mounted outlet point, an alarm siren, a flag-like fire sign and an emergency lighting device.

Underneath the burglar alarm unit 20, there is a unit 30 which comprises free/busy light signage, a flag-like fire sign and an emergency lighting.

Alternatively or additionally, a back-lit plate 40 may be provided.

A first home automation unit command 50 is therefore provided, which e.g. can allow the lights to be switched on or off or even to control a humidity sensor.

The panel 10 can also provide, on the side facing the outside of the house, a bell 60 with name-holder case and/or a badge reader.

Finally, the panel 10" can comprise a bypass socket or a Schuko power socket 70, as well as a step light 80 and a doorbell buzzer.

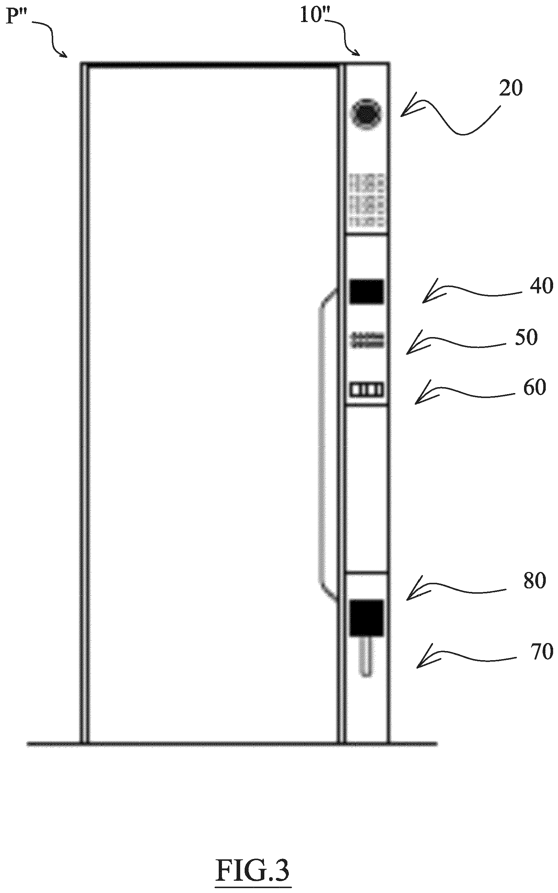

Figure 3 is a front view of a door P" equipped with a panel for home automation 10", according to a third implementation of the invention, in particular for offices.

Also in this case, the panel 10" is integrated into the jamb of the door P", with the above-mentioned advantages in terms of installation of this panel 10" in a room equipped with electrical loads of a home automation system.

First of all, the panel 10" comprises a set of elements related to a burglar alarm system 20, i.e. a motion sensor or camera, a loudspeaker, a wall-mounted outlet point, an alarm siren, a flag-like fire sign and an emergency lighting device.

Underneath the burglar alarm unit 20, there is a video intercom 30 equipped with a display that allows text or alerts to be displayed.

Alternatively, a back-lit plate may be provided.

Therefore, a first command of home automation unit 40 is provided, which e.g. can allow the lights to be switched on or off or even to control, through special switch, motorised shutters or curtains and a thermostat for controlling the indoor temperature to be set.

These commands can also be input through the touch screen integrated into the panel 10".

A second home automation unit command 50 can also be provided to switch the lights on or off or even to control, through special switch, motorised shutters or curtains or other through special switches.

The panel 10" can also provide, on the side facing the outside of the house, a bell 60 with name-holder case and/or a badge reader.

Finally, the panel 10" can comprise a bypass socket or a Schuko power socket 70, as well as a step light and a doorbell buzzer.

The structure of the panels 10, 20 and 30 is shown in figures 1-3 by way of non-limiting example, since different configurations of the panels and devices combined therewith may also be possible without thereby departing from the scope of the invention.

Obviously, modifications or improvements that are dictated by contingent or particular reasons may be made to the invention as described, without thereby departing from the scope of the invention as claimed below.

## Claims

1. Integrated panel (10, 10', 10") for home automation, wherein the aforesaid panel is adapted to house electrical components for home or professional use, in particular for applications for automating or controlling the operation of electrical loads, wherein the aforesaid panel comprises a container configured to enclose wiring which can be combined with the aforesaid electrical loads, wherein the aforesaid panel comprises surfaces facing inwards and/or outwards of a room for home or professional use, which it is accessed through a door (P, P' P"), said surfaces having a plurality of user-operable commands in order to act as control means on the aforesaid electrical loads, said surfaces further comprising audible and/or light indicators related to physical states and/or parameters of the room, **characterised in that** the aforesaid panel (10, 10', 10") is integrated into the jamb of the aforesaid door (P, P', P").

2. Integrated panel for home automation according to claim 1, wherein the panel comprises a set of elements related to a burglar alarm system, i.e. a motion sensor or camera, a loudspeaker, a wall-mounted outlet light point, an alarm siren, a flag-like fire sign and an emergency lighting device.

3. Integrated panel for home automation according to claim 1, wherein there is a video intercom equipped with a display that allows text or alerts to be displayed.

4. Integrated panel for home automation according in the claim 1, wherein a first control of home automation unit is provided, to allow lights to be switched on or off or even to control, through special switch, motorised shutters or curtains and to set a thermostat for controlling the indoor temperature.

5. Integrated panel for home automation according to claim 1, wherein the panel may comprise a bypass socket or a Schuko power socket as well as a step light and a doorbell buzzer.

6. Integrated panel for home automation according to claim 1, wherein the panel can comprise a free/busy light signage, a flag-like fire sign and an emergency lighting.

7. Integrated panel for home automation according to claim 1, wherein the panel may comprise a home automation unit command 50 to allow lights to be switched on or off or to control a humidity sensor and/or a thermostat for controlling the indoor temperature.

8. Integrated panel for home automation according to claim 1, wherein the panel may comprise a badge reader.
